# EUROPEAN PATENT APPLICATION

(11) **EP 4 748 563 A1**
(43) Date of publication of application: **27.05.2026**
(21) Application number: 25210690.1
(22) Date of filing: 23.10.2025
(51) Int. Cl.: B30B 3/04, B65H 23/24, H01M 4/04

(54) **ROLL PRESS APPARATUS FOR MANUFACTURING ELECTRODE PLATE**

(30) Priority: 21.11.2024 KR 20240167622
(71) Applicant: SAMSUNG SDI CO., LTD., Yongin-si, Gyeonggi-do 17084 (KR)
(72) Inventor: NAMGUNG, Hanbyeol, 17084 Yongin-si (KR)
(74) Representative: Marks & Clerk LLP

(57) **Abstract**

A roll press apparatus for manufacturing an electrode plate includes a frame portion, a first roller rotatable on the frame portion, the first roller being configured to press a first surface of an electrode plate, a second roller rotatable on the frame portion, the second roller being configured to press a second surface of the electrode plate facing the first surface, and an air spray part on the frame portion, the air spray part being configured to spray air onto a surface on the electrode plate pressed by the first roller and the second roller.

## Description

### BACKGROUND

### 1. Field

The present disclosure relates to a roll press apparatus for manufacturing an electrode plate in which stress non-uniformity is reduced or does not occur and manufacturing quality is improved.

### 2. Description of the Related Art

In general, a roll press apparatus is an apparatus that processes metal materials using the plasticity of metal, so the metal materials may be processed by passing between two rotating rolls. For example, the roll press apparatus may use a hydraulic press to apply force through large rotating rolls, and may process an electrode plate of a secondary battery. The electrode plate of the secondary battery may be manufactured to include a composite coating portion with a first thickness on a surface of a substrate, and an insulating coating portion with a second thickness, different from the first thickness, on an edge of the substrate at an edge of the composite coating portion.

### SUMMARY

An embodiment of the present disclosure includes a frame portion, a first roller rotatably installed on the frame portion and pressing a first surface of an electrode plate, a second roller rotatably provided on the frame portion and pressing a second surface facing the first surface of the electrode plate, and an air spray part for spraying air onto a surface pressed by the first roller and the second roller on the electrode plate.

A plurality of air spray parts is installed on one side of the first roller and the second roller.

The air spray part may be installed in a pair in a position facing each other with the electrode plate interposed therebetween in a position spaced apart from one side of the first roller and the second roller.

The air spray part may include a housing installed on the frame portion and having a space formed therein into which air flows, a mounting supplier that mounts the housing on the frame portion and has an air path formed therein to supply air to the interior of the housing, and a spray part installed in the housing and spraying air inflowed from the mounting supplier to the electrode plate.

The mounting supplier may include a pair of pipes in which the spray part is rotatably installed on the frame portion and an air path through which air moves is formed inside, an air pump supplying air to the air path, and a motor providing rotational driving force to the pipes.

The spray part may include an air path installed inside the housing and through which air moves, and a nozzle installed on the outside of the housing and connected to the air path to spray air toward the electrode plate.

The air path may include an inflow path installed inside the housing and connected to the pipes so that air moves, a branch path branching off in the lateral direction of the inflow path, and a spray path connected to the branch path and installed on the inner wall surface of the housing, transmitting air to the nozzle.

The housing may be formed in a cylindrical shape with the pipes connected on both sides.

The inflow path may be installed in the length direction of the housing at an internal position spaced apart from the inner wall surface of the housing.

The branch path may have one end connected to the inflow path and the other end connected to the spray path.

A plurality of branch paths may be radially connected with the inflow path as the center.

A plurality of nozzles may be connected to the branch path and formed on the surface of the housing.

The plurality of nozzles may be partially opened and closed by an opening and closing member.

The opening and closing member may be a sliding panel that slides along the surface of the housing to open and close a part of the plurality of nozzles.

The sliding panel may be slid in the diameter direction of the housing.

The sliding panel may be slid in a direction perpendicular to the diameter direction of the housing.

The plurality of air spray parts may be installed on both sides facing each other with the first roller and the second roller interposed therebetween.

At least some of the above and other features of the invention are set out in the claims.

### BRIEF DESCRIPTION OF THE DRAWINGS

Features will become apparent to those of skill in the art by describing in detail example embodiments with reference to the attached drawings, in which:
FIG. 1 is a perspective view schematically illustrating a roll press apparatus for manufacturing an electrode plate according to an embodiment of the present disclosure;
FIG. 2 is a perspective view schematically illustrating an air spray part according to an embodiment of the present disclosure;
FIG. 3 is a cross-sectional view along line A-A of FIG. 2;
FIG. 4 is a cross-sectional view along line B-B of FIG. 2;
FIG. 5 is a side view of a main part schematically illustrating a nozzle according to an embodiment of the present disclosure spraying air to the electrode plate rolling position of first and second rollers;
FIG. 6 is a side view of the main part schematically illustrating a state in which air is sprayed onto the electrode plate according to an embodiment of the present disclosure;
FIG. 7 is a side view of the main part schematically illustrating a nozzle according to an embodiment of the present disclosure spraying air to a position spaced a certain distance apart from the electrode plate rolling position of the first and second rollers;
FIG. 8 is a side view of the main part schematically illustrating the nozzle according to an embodiment of the present disclosure spraying air in the vertical direction of the electrode plate;
FIG. 9 is a perspective view schematically illustrating an air spray part according to another embodiment of the present disclosure; and
FIG. 10 is a side view of the main part schematically illustrating an air spray part according to still another embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

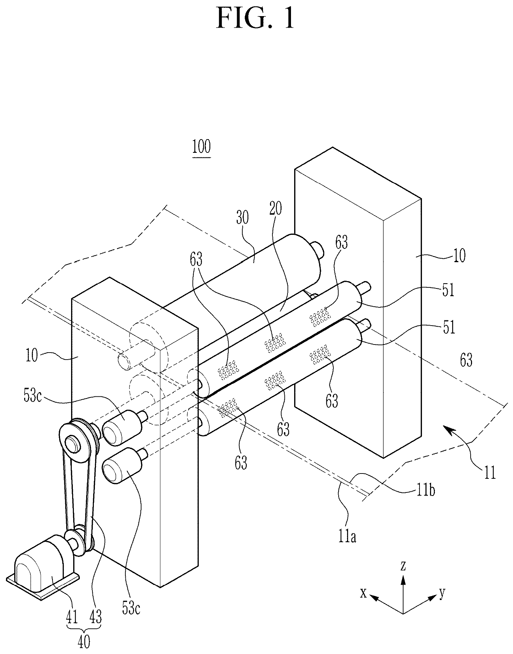

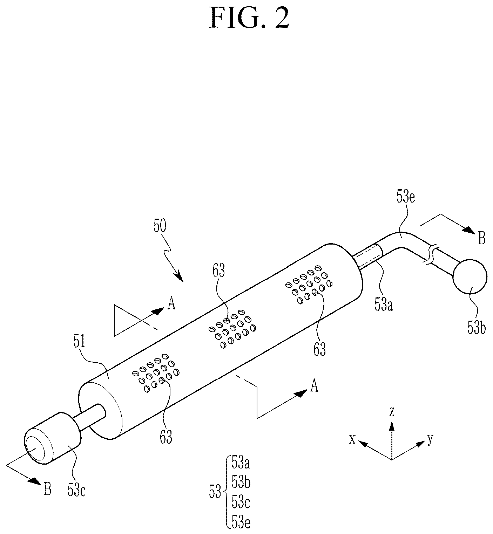

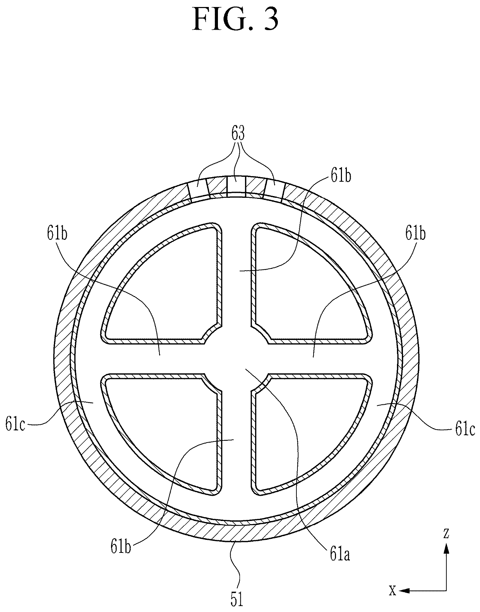

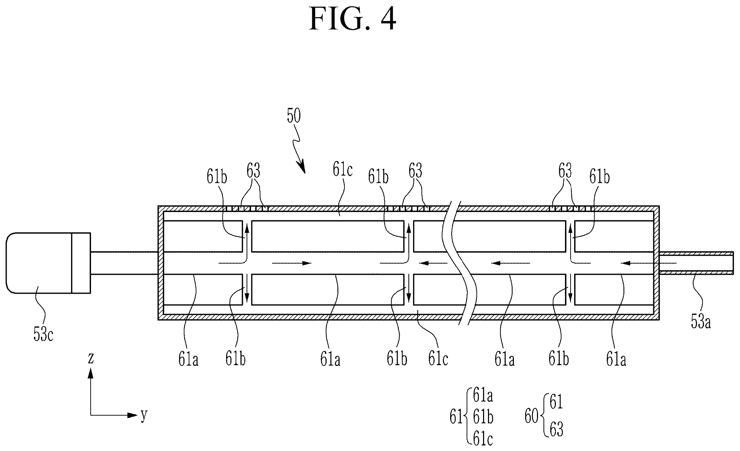

FIG. 1 is a perspective view schematically illustrating a roll press apparatus for manufacturing an electrode plate according to an embodiment of the present disclosure, FIG. 2 is a perspective view schematically illustrating an air spray part according to an embodiment of the present disclosure, FIG. 3 is a cross-sectional view along line A-A of FIG. 2, and FIG. 4 is a cross-sectional view along line B-B of FIG. 2.

As shown in FIGS. 1 to 4, a roll press apparatus 100 for manufacturing an electrode plate according to an embodiment of the present disclosure may include a frame portion 10, a first roller 20 rotatably installed on the frame portion 10 to press a first surface 11a of an electrode plate 11, a second roller 30 rotatably installed on the frame portion 10 to press a second surface 11b of the electrode plate facing the first surface 11a, and an air spray part 50 spraying air onto the surfaces pressed by the first roller 20 and the second roller 30 on the electrode plate 11.

The frame portion 10 may be installed on the floor surface of the work space, and the first roller 20 and the second roller 30 may be installed rotatably thereon. For example, the first and second rollers 20 and 30 may vertically overlap each other, e.g., along the Z-axis direction, between sidewalls of the frame portion 10.

The first roller 20 may be rotatably installed by the driving force of a driver 40, while supporting the first surface 11a of the electrode plate 11. The first roller 20 may be installed with a long length in the width direction of the first surface 11a of the electrode plate 11 (e.g., a longitudinal direction of the first roller 20 may extend along the width direction of the first surface 11a of the electrode plate 11), and may be installed to press and support the first surface 11a of the electrode plate 11 while maintaining a predetermined distance from the second roller 30.

The second roller 30 may be installed to press the second surface 11b of the electrode plate 11 during the manufacturing process of the electrode plate 11. The second roller 30 may be installed to press-mold the second surface 11b of the electrode plate 11 in the same or a similar shape as the first roller 20.

The driver 40 may be installed to provide rotational driving force to the first roller 20 and the second roller 30. For example, the driver 40 may include a motor 41 that provides rotational driving force, and a belt member 43 connected to the rotational axis of the motor 41 and the first roller 20. The rotational driving force of the motor 41 is transmitted to the first and second rollers 20 and 30 by the belt member 43, so that the first and second rollers 20 and 30 may be properly rotated, thereby enabling smooth manufacturing of the electrode plate 11.

The air spray part 50 may be installed at a position close to the first and second rollers 20 and 30. The air spray part 50 may be installed to reduce or prevent wrinkles or breakage from occurring in an uncoated region during the rolling process of the electrode plate 11 by spraying high-pressure air to the position where the electrode plate 11 is rolled by the first and second rollers 20 and 30.

In detail, referring to FIGS. 1 and 2, the air spray part 50 may include a housing 51 installed on the frame portion 10 and having a space formed inside into which air flows, a mounting supplier 53 that mounts the housing 51 on the frame portion 10 and has an air path 61 formed (e.g., accommodated) therein to supply air to the interior of the housing 51, and a spray part 60 installed in the housing 51 and spraying air inflowed from the mounting supplier 53 to the electrode plate 11.

The housing 51 may be installed at a position spaced apart a certain distance from the side surfaces of the first and second rollers 20 and 30, and may be shaped in a roughly cylindrical shape. The housing 51 may be installed on the frame portion 10 by the mounting supplier 53.

The mounting supplier 53 may be installed so as to supply air to the interior of the housing 51 while mounting the housing 51 on the frame portion 10. In detail, as illustrated in FIG. 2, the mounting supplier 53 may include a pipe 53a in which the spray part 60 is rotatably installed on the frame portion 10 and the air path 61 through which air moves is formed inside, an air pump 53b supplying air to the air path 61, and the motor 41 providing rotational driving force to the pipe 53a.

The pipe 53a may be installed on the side surface of the housing 51 and may be rotatably installed on the frame portion 10. The air path 61 may be formed inside the pipe 53a, and may be installed so that pressed air flows into the interior of the housing 51 by driving the air pump 53b. The air pump 53b may be installed so as to be connected to the pipe 53a by an air line 53e so as to supply air into the interior of the housing 51 from opposite sides of the housing 51. The motor 41 may be installed in one of a pair of pipes 53a, and may be installed so that the housing 51 is rotated (e.g., rotatable) by the forward or reverse rotational operation of the pipes 53a.

According to the rotational operation of the housing 51, the spray angle of a nozzle 63 described later may be changed to an appropriate angle (e.g., via a handle 53c). As such, adjusting the spray angle of the nozzle 63 will be described in more detail below while describing the spray part 60.

The spray part 60 may be installed in the housing 51 to spray air flowed from the mounting supplier 53 onto the electrode plate 11. The spray part 60 may reduce or prevent stress non-uniformity and wrinkles from occurring in the electrode plate 11 during the rolling process by spraying air to an uncoated region 11f during the rolling process of the electrode plate 11.

In detail, the spray part 60 may include the air path 61 installed inside the housing 51 through which air moves, and the nozzle 63 installed outside the housing 51 and connected to the air path 61 to spray air in the direction of the electrode plate.

The air path 61 may be installed inside the housing 51 and may be connected to the pipe 53a, so that air supplied from the pipe 53a may be supplied to the nozzle 63. The air path 61 may include a central path 61a (e.g., an inflow path) installed inside the housing 51 and connected to the pipe 53a through which air moves, a branch path 61b branching off the central path 61a in the lateral direction of the central path 61a, and a spray path 61c connected to the branch path 61b and installed on the inner wall surface of the housing 51, transmitting air to the nozzle 63.

The central path 61a may be installed inside the housing 51 and may extend lengthwise in the center of the housing 51 (e.g., along a central axis of the housing 51). The central path 61a may have a length corresponding to (e.g., equal to) a length of the housing 51 (e.g., in the y-axis direction). The central path 61a may be installed so that a first end may be connected to one of a pair of pipes 53a, and a second end (opposite the first end) may be connected to the other of the pair of pipes 53a, so that air flows into the interior of the housing 51. For example, the spray part 60 may be installed as a single unit between the pair of pipes 53a, or a plurality of spray parts 60 may be connected to each other.

The branch path 61b may be connected to the central path 61a. The branch path 61b may be installed so that a first end is connected to the central path 61a and the second end is connected to the spray path 61c, so as to supply air flowed through the spray part 60 to the spray path 61c.

A plurality of branch paths 61b may be connected to the central path 61a, and may be spaced apart from each other in the length direction of the spray part 60. The plurality of branch paths 61b may be connected radially with the central path 61a at the center, and may be connected to the spray path 61c.

The spray path 61c may be installed on the inner wall surface of the housing 51 while connected to the branch path 61b. The spray path 61c may be installed with a long length in the length direction of the inner wall surface of the housing 51 to supply air to the nozzle 63. For example, referring to FIGS. 3 and 4, the spray path may extend continuously along an entire inner wall surface of the housing 51.

The nozzle 63 may be installed in the spray path 61c so that air supplied through the spray path 61c is sprayed toward the electrode plate 11. The nozzle 63 may be connected to the spray path 61c and may be exposed to the outer surface of the housing 51 to spray air onto the electrode plate 11. For example, referring to FIG. 3, the nozzle 63 may extend through an entire thickness of the wall of the housing 51 to connect the spray path 61c to an exterior of the housing 51 (e.g., so the spray path 61c may be in fluid communication with an exterior of the housing 51 through the nozzle 63).

For example, referring to FIGS. 3 and 4, a plurality of nozzles 63 may be formed in the housing 51, e.g., a grouping of nozzles 63 may be formed to overlap each of the branch paths 61b in the z-axis direction. In another example, the nozzle 63 may be formed as a single unit.

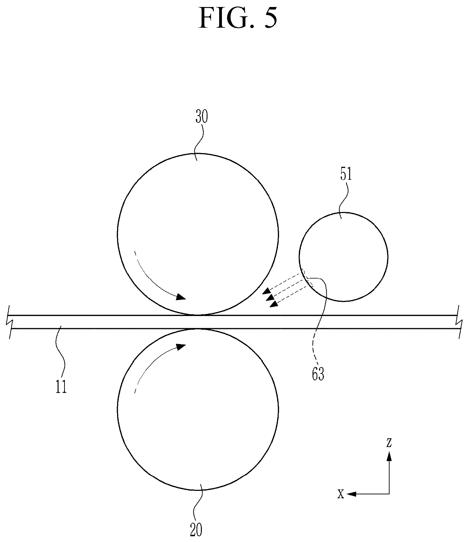

Below, the spraying of air to the electrode plate 11 using the nozzle 63 is described in more detail with reference to FIGS. 5-6.

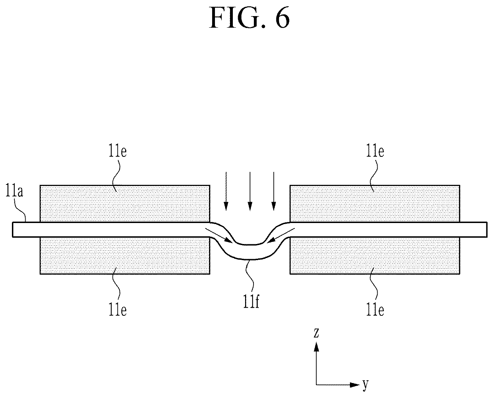

FIG. 5 is a side view of the housing 51 with the nozzle 63 adjacent to the first and second rollers 20 and 30 while spraying air onto the electrode plate 11, and FIG. 6 is a side view of the electrode plate 11 in a state of being sprayed with air according to an embodiment of the present disclosure.

As shown in FIGS. 5 and 6, the nozzle 63 in the housing 51 (FIG. 5) sprays air toward the rolling position of the electrode plate 11, which may reduce or prevent stress non-uniformity from occurring in the width direction of the electrode plate 11 during the rolling process of the electrode plate 11. In other words, referring to FIG. 6, by spraying air to the uncoated region 11f between coated portions 11e coated on a base material of the electrode plate 11, it is possible to reduce or prevent stress non-uniformity from occurring in the electrode plate. In the present embodiment, the housing 51 is positioned on the downstream side of the first and second rollers 20 and 30 with respect to the direction in which the electrode plate 11 travels.

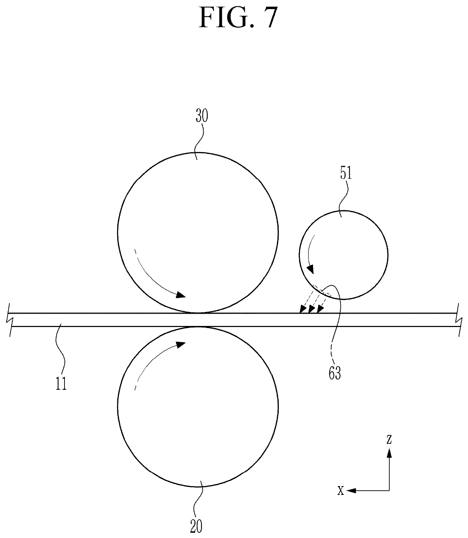

FIG. 7 is a side view of the housing 51 spraying air to a position spaced a certain distance apart from the electrode plate rolling position of the first and second rollers 120 and 130.

As shown in FIG. 7, the housing 51 may be rotated at a certain angle to change the spraying position of the nozzle 63 to a position spaced a certain distance apart from the rolling position of the first and second rollers 20 and 30. For example, the housing 51 may be rotated at an angle of approximately 45 degrees with respect to the surface of the electrode plate 11, so that the air sprayed from the nozzle 63 may be inclined (e.g., angled) and press the rolled surface of the electrode plate 11. Thus, the uncoated region of the electrode plate 11 may be manufactured with minimal wrinkles by a spraying operation of high-pressure air.

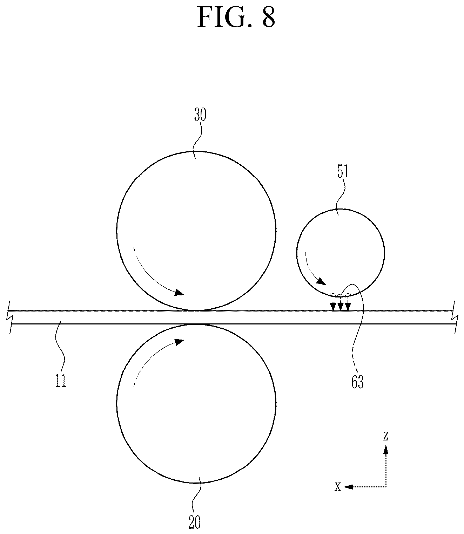

FIG. 8 is a side view of the housing 51 spraying air in the vertical direction of the electrode plate 11.

As shown in FIG. 8, the housing 51 may be further rotated in a direction perpendicular to the surface of the electrode plate 11, so that air sprayed from the nozzle 63 may vertically press the rolled surface of the electrode plate 11. Accordingly, the uncoated region of the electrode plate 11 may be stretched in the thickness direction of the electrode plate 11 by the vertical spraying operation of high-pressure air, so that the stress generated after rolling the electrode plate 11 is distributed in the width direction of the electrode plate 11, thereby reducing or preventing the occurrence of stress non-uniformity.

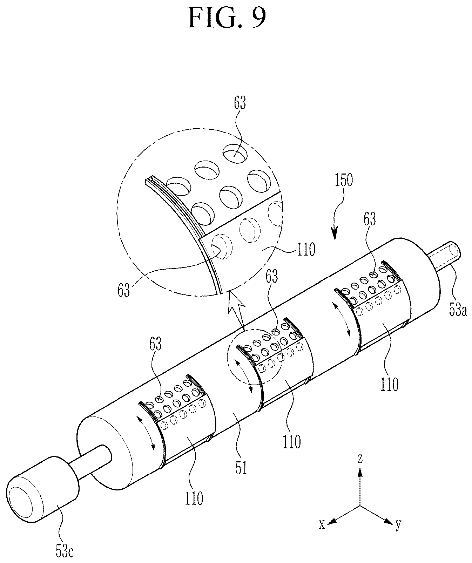

FIG. 9 is a perspective view schematically illustrating an air spray part according to another embodiment of the present disclosure. The same reference numerals as in FIGS. 1 to 8 indicate identical or similar elements having the same or a similar function. Below, detailed descriptions of identical reference numbers are omitted.

As shown in FIG. 9, a plurality of nozzles 63 of the air spray part 50 of the roll press apparatus for manufacturing the electrode plate may be formed on the side surfaces of the housing 51. Some of the plurality of nozzles 63 may be opened and closed by an opening and closing member 110, so that the amount of air sprayed onto the electrode plate 11 may be adjusted, thereby controlling the pressure force applied to the electrode plate 11 by the air and the area pressed.

The opening and closing member 110 may be a sliding panel that slides (e.g., is movable) along the surface of the housing 51 to open and close part of the plurality of nozzles 63. The sliding panel of the opening and closing member 110 may be installed in a substantially rectangular plate shape to be able to move a certain distance along the surface of the housing 51, and may be installed to selectively open and close part of the plurality of nozzles 63.

The sliding panel may for example be described as having a rectangular shape in the present embodiment, but may also include a rounded shape on some of its edges. For example, the sliding panel may be manually opened and closed by an operator. In another example, the sliding panel may be opened and closed by the driving force of a predetermined driving motor.

The sliding panel may be slidably installed in the diameter direction of the housing 51 or in the length direction perpendicular to the diameter direction. As such, since some of the plurality of nozzles 63 may selectively open and close a portion of the sliding panel, the pressure force of the air sprayed from the nozzles 63 onto the electrode plate 11 may be appropriately adjusted, thereby improving the manufacturing quality of the electrode plate 11.

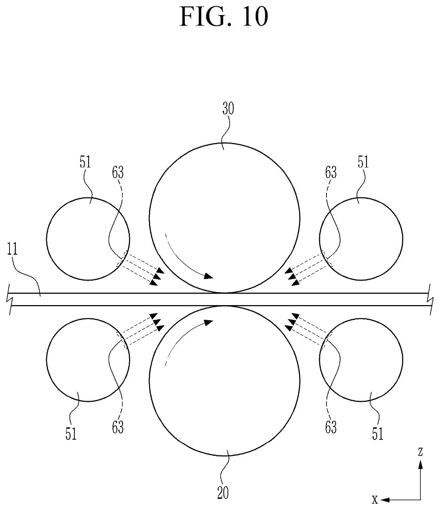

FIG. 10 is a side view of the air spray part according to still another embodiment of the present disclosure. The same reference numerals as in FIGS. 1 to 9 indicate identical or similar elements having the same or a similar function. Below, detailed descriptions of identical reference numbers are omitted.

As shown in FIG. 10, a plurality of air spray parts 50 of the roll press apparatus for manufacturing the electrode plate may be installed on both sides with the first roller 20 and the second roller 30 interposed therebetween. Accordingly, the air sprayed from the nozzles 63 may be more effectively delivered onto the electrode plate, thereby pressing the uncoated region.

By way of summation and review, during the process of manufacturing an electrode plate, stress non-uniformity may occur in an uncoated region of the electrode plate, thereby resulting in poor manufacturing quality.

In contrast, an embodiment of the present disclosure provides a roll press apparatus for manufacturing an electrode plate, which reduces or prevents occurrence of stress non-uniformity during the roll press manufacturing process of the electrode plate, thereby improving the quality of the electrode plate manufacturing. That is, according to an embodiment of the present disclosure, high-pressure air is sprayed at the rolling position of the electrode plate to reduce or prevent stress imbalances from occurring during the manufacturing of the electrode plate, thereby improving the quality of the electrode plate manufacturing.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A roll press apparatus for manufacturing an electrode plate, the apparatus comprising:
a frame portion;
a first roller rotatable on the frame portion, the first roller being configured to press a first surface of the electrode plate;
a second roller rotatable on the frame portion, the second roller being configured to press a second surface of the electrode plate facing the first surface; and
an air spray part on the frame portion, the air spray part being configured to spray air onto a surface on the electrode plate pressed by the first roller and the second roller.

2. The roll press apparatus for manufacturing the electrode plate as claimed in claim 1, wherein the air spray part includes a plurality of air spray parts on a side of the first roller and the second roller.

3. The roll press apparatus for manufacturing the electrode plate as claimed in claim 2, wherein the air spray part includes a pair of air spray parts at a position spaced apart from the side of the first roller and the second roller, the pair of air spray parts configured to face each other with the electrode plate interposed therebetween.

4. The roll press apparatus for manufacturing the electrode plate as claimed in claim 1, 2 or 3, wherein the air spray part includes:
a housing on the frame portion, the housing having a space therein into which air flows;
a mounting supplier mounting the housing on the frame portion, the mounting supplier having an air path therein to supply air to the space of the housing; and
a spray part on the housing, the spray part being configured to spray air from the mounting supplier onto the electrode plate.

5. The roll press apparatus for manufacturing the electrode plate as claimed in claim 4, wherein the mounting supplier includes:
a pair of pipes rotatable on the frame portion, the spray part accommodating the air path from the pair of pipes into the housing;
an air pump configured to supply air to the air path; and
a motor configured to provide a rotational driving force to the pair of pipes.

6. The roll press apparatus for manufacturing the electrode plate as claimed in claim 5, wherein the spray part includes:
the air path inside the housing; and
a nozzle on an outside of the housing, the nozzle being connected to the air path and being configured to spray air toward the electrode plate.

7. The roll press apparatus for manufacturing the electrode plate as claimed in claim 6, wherein the air path includes:
a central path inside the housing and connected to the pair of pipes;
a branch path branching off the central path in a lateral direction; and
a spray path connected to the branch path, the spray path being on an inner wall surface of the housing and connected to the nozzle.

8. The roll press apparatus for manufacturing the electrode plate as claimed in claim 7, wherein the housing has a cylindrical shape, the pair of pipes being connected on opposite sides of the housing.

9. The roll press apparatus for manufacturing the electrode plate as claimed in claim 8, wherein the central path extends along a longitudinal direction of the housing at an internal position spaced apart from the inner wall surface of the housing.

10. The roll press apparatus for manufacturing the electrode plate as claimed in claim 9, wherein the branch path has a first end connected to the central path and a second end connected to the spray path.

11. The roll press apparatus for manufacturing the electrode plate as claimed in claim 10, wherein the branch path includes a plurality of branch paths, the plurality of branch parts being radially connected to the central path.

12. The roll press apparatus for manufacturing the electrode plate as claimed in claim 11, wherein the nozzle is connected to the branch path, the nozzle including a plurality of nozzles on a surface of the housing.

13. The roll press apparatus for manufacturing the electrode plate as claimed in claim 12, further comprising an opening and closing member, the opening and closing member being configured to partially open and close the plurality of nozzles.

14. The roll press apparatus for manufacturing the electrode plate as claimed in claim 13, wherein the opening and closing member is a sliding panel that slides along the surface of the housing to open and close a part of the plurality of nozzles, and optionally
wherein the sliding panel is movable in a diameter direction of the housing, and optionally
wherein the sliding panel is movable in a direction perpendicular to the circumferential direction of the housing.

15. The roll press apparatus for manufacturing the electrode plate as claimed in claim 1, wherein the air spray part includes a plurality of air spray parts facing each other, the first roller and the second roller being between facing ones of the plurality of air spray parts.
